# EUROPÄISCHE PATENTSCHRIFT

(11) **EP 2 153 289 B1**
(45) Veröffentlichungstag und Bekanntmachung des Hinweises auf die Patenterteilung: **03.08.2011**
(21) Anmeldenummer: 08749493.6
(22) Anmeldetag: 21.05.2008
(51) Int. Cl.: G05B 19/042

(54) **VERFAHREN ZUM PARAMETRIEREN VON BETRIEBSMITTELN**
METHOD FOR PARAMETERIZING OPERATING MEANS
PROCÉDÉ POUR LE PARAMÉTRAGE DE MOYENS DE FONCTIONNEMENT

(30) Priorität: 25.05.2007 DE 102007024687
(43) Veröffentlichungstag der Anmeldung: 17.02.2010
(73) Patentinhaber: Phoenix Contact GmbH & Co. KG, 32825 Blomberg (DE)
(72) Erfinder: WEGENER, Friedrich, 37647 Vahlbruch (DE); KRUMSIEK, Dietmar, 31860 Emmerthal (DE); KALHOFF, Johannes, 32825 Blomberg (DE)
(74) Vertreter: Kampfenkel, Klaus
(86) Internationale Anmeldenummer: PCT/EP2008/004064
(87) Internationale Veröffentlichungsnummer: WO 2008/145290

(56) Entgegenhaltungen:
- WO-A-2006/029994
- WO-A-2006/128395
- DE-A1- 10 132 036
- DE-A1- 10 343 670

## Beschreibung

Die Erfindung betrifft ein Verfahren zum Parametrieren von an einem Datenübertragungsmedium angeschalteten Betriebsmitteln.

Zur Inbetriebnahme und Parametrierung von Betriebsmitteln, wie zum Beispiel von Feldgeräten einer Automatisierungsanlage, gibt es Parametrierungssoftware, wie z. B. das FDT/DTM (Field Device Tool/Device Type Manager)-Softwaretool. Mit Hilfe des FDT/DTM-Konzepts ist es möglich, herstellerspezifisch Feldgeräte zu parametrieren und zu bedienen. Eine in einem FDT-Container eingebundene Software (ein DTM wird vom Gerätehersteller geschrieben) kann über Kommunikations-DTMs auf das Feldgerät in einer Punkt-zu-Punkt Beziehung zugreifen. Der Administrator der Anlage übergibt die notwendigen DTMs und den FDT-Container, soweit dieser nicht bereits durch eine Leitstation der Anlage bereitgestellt wird, der Anlage. Nutzer der Anlage können nunmehr die Geräteparametrierung verwenden.

Bei einem anderen bekannten Konzept schreibt jeder Hersteller in einer definierten Sprache, beispielsweise XML, eine Gerätebeschreibung für jedes Gerät. Diese Gerätebeschreibung definiert das Geräteprofil, d. h. mögliche Einstellungen des Geräts. Die Semantik wird zum Beispiel durch Feldbus-Nutzerorganisationen vorgegeben. Der Administrator übergibt die Gerätebeschreibung dann der Anlage. Nutzer der Anlage können jetzt auf die Geräteparametrierung mit Hilfe der Anlagensoftware (z. B. Programmiersystem oder Netzwerkkonfigurator) zugreifen.

Ein gravierender Nachteil dieser Konzepte ist darin zu sehen, dass jedes Feldgerät und jede Anlagenkomponente einzeln parametriert werden muss, auch wenn identische Feldgeräte und Komponenten vorliegen.

Aus WO 2006/128395 A1 ist ein Parametrierungsgerät zum Erzeugen von geräteindividuelle Betriebsparameter festlegenden Parametrierungssignalen für ein oder mehrere elektrische Geräte einer elektrischen Anordnung sowie ein entsprechendes verfahren zum Parametrieren elektrischer Geräte bekannt. Bei dem in WO 2006/128395 A1 beschriebenen Verfahren werden in einer Speichereinrichtung für eine Vielzahl elektrischer Geräte deren Betriebsfunktionen sowie geräteindividuelle Betriebsparameter erfasst, in Abhängigkeit einer gewünschten Betriebsfunktion aus der Speichereinrichtung eine Liste von geeigneten Geräten ausgelesen und dem Benutzer zur Auswahl eines Gerätes angezeigt.

Der Erfindung liegt die Aufgabe zugrunde, ein Parametrierungsverfahren zur Verfügung zu stellen, mit dem eine benutzerfreundliche Parametrierung von Betriebsmitteln möglich ist, auch wenn komplexe Betriebsmittel zum Einsatz kommen. Komplexe Betriebsmittel, heißt beispielsweise, dass Betriebsmittel über mehrere unterschiedliche Funktionen verfügen und in verschiedenen Anwendungsbereichen eingesetzt werden können.

Ein Kerngedanke der Erfindung ist darin zu sehen, die Betriebsmitteln nicht über die Parameter der jeweiligen Feldgeräte selbst, sondern in Abhängigkeit von vordefinierten Gerätefunktionen zu parametrieren. Auf diese Weise können auch Gruppen von Geräten parametriert werden, die die gleiche Gerätefunktion unterstützen. Insbesondere ist es nicht erforderlich, dass die Bedienperson der Anlage jeden Parameter der eingesetzten Geräte kennen muss. Lediglich die Funktion, die die Feldgeräte innerhalb der Anlage ausführen sollen, muss der Bedienperson bekannt sein.

Dieses technische Problem löst die Erfindung durch ein Verfahren zum Parametrieren von an einem Datenübertragungsmedium angeschalteten Betriebsmitteln. Hierzu werden für wenigstens einige der angeschalteten Betriebsmittel jeweils eine Gerätebeschreibung, vorzugsweise in einer zentralen Einrichtung, hinterlegt. Die Gerätebeschreibung umfasst wenigstens einen Funktion sowie den dazu gehörenden Parameterdatensatz. Optional können zu jedem Parametersatz auch noch Wertebereiche angegeben sein. Funktionen eines Betriebsmittels können beispielsweise Bohren, Fräsen, Scannen und dergleichen sein. Ein Parametersatz kann einen einzelnen oder mehrere Parameter enthalten, die beispielsweise den Bewegungsablauf eines Betriebsmittels festlegen. Ein Parameter kann aber selbst auch einen Wertebereich darstellen. Wenn separat zu den Parametersätzen Wertebereiche angegeben werden, so können diese beispielsweise die Bohrtiefe oder den Fräsgrad definieren. Weiterhin wird vorzugsweise in der zentralen Einrichtung eine Liste von mehreren vorbestimmten Gerätefunktionen gespeichert, denen jeweils der entsprechende Parametersatz der Betriebsmittel zugeordnet wird. Wird wenigstens eine Gerätefunktion ausgewählt, so wird unter Ansprechen auf die ausgewählte Gerätefunktion wenigstens ein Betriebsmittel parametriert, welches diese Gerätefunktion unterstützt.

Angemerkt sei an dieser Stelle, dass die vorgegebene Reihenfolge der im Anspruch 1 angegebenen Verfahrensschritte nicht deren zeitlichen Ablauf festlegt.

Erfindungsgemäβ werden wenigstens einer vorbestimmten Gerätefunktion unterschiedliche Parametersätze zugewiesen , die jeweils zum Parametrieren eines separaten Betriebsmittels verwendet werden können. Die Parmetrierung wird wiederum dadurch einleitet, dass wenigstens eine Gerätefunktion und mehrere Betriebsmittel, die diese Gerätefunktion unterstützen, ausgewählt werden. Die der ausgewählten Gerätefunktion zugeordneten Parametersätze werden jeweils zu den dazu gehörenden Betriebsmitteln übertragen, wobei jeder Parametersatz ein vorbestimmtes Betriebsmittel der ausgewählten Betriebsmittel individuell parametriert. Dank dieses Verfahrens ist es möglich, Betriebsmittel unterschiedlicher Hersteller, die den gleichen Funktionstyp unterstützen, in einem einzigen Schritt zu parametrieren, indem lediglich die von diesen Betriebsmitteln auszuführende Gerätefunktion an der zentralen Einrichtung ausgewählt wird.

Angemerkt sei an dieser Stelle, dass neben den ausgewählten Betriebsmitteln auch nicht ausgewählte Betriebsmittel die ausgewählte Gerätefunktion unterstützen können. Allerdings werden die nicht ausgewählten Betriebsmittel in diesem Fall nicht parametriert. Mit Hilfe dieses Verfahrens ist es daher möglich, Betriebsmittel auszuwählen, die eine sogenannte logische Gruppe bilden, wobei Änderungen oder eine Bearbeitung von Gerätefunktionen nur innerhalb der logischen Gruppe von Betriebsmitteln Auswirkungen haben.

Vorteilhafte Ausführungsvarianten sind Gegenstand der Unteransprüche.

Wenigstens einer der gespeicherten, vorbestimmten Gerätefunktionen wird lediglich ein einziger Parametersatz zugewiesen, der zur Parametrierung einer Gruppe von Betriebsmitteln desselben Typs verwendet werden kann. Nunmehr wird eine Gruppe von Betriebsmitteln desselben Gerätetyps ausgewählt. Der der ausgewählten Gerätefunktion zugeordnete Parametersatz wird dann zur ausgewählten Gruppe von Betriebsmitteln übertragen, die allesamt durch den gleichen Parametersatz parametriert werden. Dank dieses Verfahrens ist es möglich, funktionsgleiche Betriebsmittel des selben Herstellers parallel zu parametrieren, indem lediglich die gewünschte Gerätefunktion an der zentralen Einrichtung aufgerufen wird.

Zur Übertragung der Parametersätze kann das bekannte FDT/DTM-Konzept verwendet werden, bei dem sowohl die zentrale Einrichtung als auch die zu parametrierenden Betriebsmitteln eine Standardschnittstelle aufweisen.

Da in dem beschriebenen Ausführungsbeispiel die ausgewählte Gruppe von Betriebsmitteln alle die gleiche Funktion ausführen sollen und durch ein und denselben Parametersatz parametriert werden können, kann eine einheitliche Parametrierung der Betriebsmittel erfolgen, die lediglich durch Auswahl der entsprechenden Gerätefunktion gestartet werden kann.

Um der Bedienperson das Parametrieren einer Vielzahl von Betriebsmitteln weiter zu erleichtern, werden automatisch mit dem Auswählen der auszuführenden Gerätefunktion die Betriebsmittel festgelegt, die hinsichtlich dieser Gerätefunktion parametriert werden sollen. Nachdem die Gerätefunktion ausgewählt worden ist, können die Parametersätze automatisch unter Steuerung der zentralen Einrichtung zu den entsprechenden Betriebsmitteln übertragen werden.

Bei einem zweckmäßigen Anwendungsgebiet kann es sich bei den Betriebsmitteln um Feldgeräte, wie z. B. Sensoren und Aktoren, Steuereinrichtungen und dergleichen handeln. Das Datenübertragungsmedium kann ein Feldbus, beispielsweise der Profibus oder der Interbus sein. Als Übertragungsmedium kann auch eine drahtlose Verbindung benutzt werden. Auch ein standardisierter paralleler Bus oder das Ethernet können als Übertragungsmedium eingesetzt werden.

Bei einer bevorzugten Ausführungsform werden die jeweiligen Gerätebeschreibungen in einer zentralen Einrichtung gespeichert. Die Schritte b) und c) des Anspruchs 1 werden dann in der zentralen Einrichtung durchgeführt werden und Schritt d) wird von der zentralen Einrichtung eingeleitet wird. Auf diese Weise ist eine zentrale Überwachung und Anpassung der Anlage möglich.

Alternativ wird jede Gerätebeschreibung in dem jeweiligen Betriebsmittel oder einer separaten Einrichtung, zum Beispiel einem PC, gespeichert. Bei einer erstmaligen Bestimmung einer Gerätefunktion oder Änderung einer bestehenden Gerätefunktion wird die Gerätebeschreibung desjenigen Betriebsmittels, das diese Gerätefunktion unterstützt, einer zentralen Einrichtung zur Verfügung gestellt. Die Schritte b) und c) werden dann in der zentralen Einrichtung durchgeführt und Schritt d) wird von der zentralen Einrichtung eingeleitet.

Denkbar ist auch, dass nicht nur die Gerätebeschreibung in wenigstens einem entsprechenden Betriebsmittel oder einer separaten Einrichtung gespeichert wird, sondern dass die erstmalige Bestimmung einer Gerätefunktion in dem wenigstens einen Betriebsmittel oder der separaten Einrichtung erfolgt, wobei der Gerätefunktion der entsprechende Parametersatz des jeweiligen Betriebsmittels zugeordnet und die bestimmte Gerätefunktion zusammen mit dem Parametersatz einer zentralen Einrichtung zur Verfügung gestellt wird.

Um die Parmetrierung weiter automatisieren zu können, wird Schritt d) automatisch von der zentralen Einrichtung (20 eingeleitet, wenn wenigstens eine Gerätefunktion ausgewählt worden ist.

Denkbar ist weiterhin, dass die zentrale Einrichtung auch in einem angeschalteten Betriebsmittel implementiert sein kann.

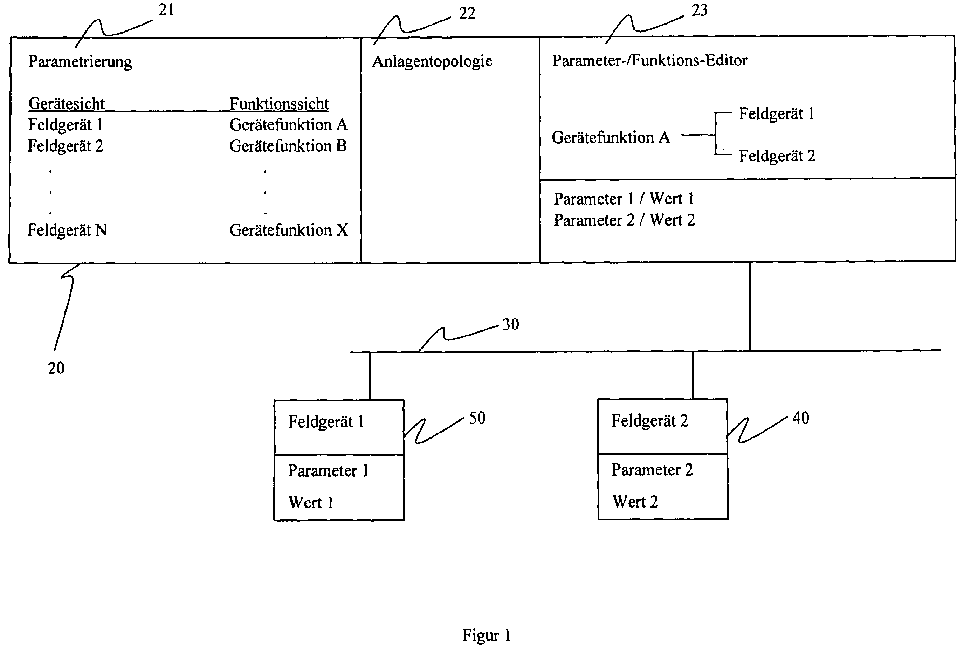

Die Erfindung wird nachfolgend anhand eines Ausführungsbeispiels in Verbindung mit der einzigen Figur näher erläutert.

Die Figur zeigt beispielsweise eine Automatisierungsanlage 10, die einen Feldbus 30 verwendet, an der lediglich der einfachen Darstellung wegen nur zwei Feldgeräte 40 und 50 sowie eine zentrale Einrichtung 20 angeschaltet sind. Bei der zentralen Einrichtung 20 kann es sich um eine programmierbare Leitstation handeln. Damit die Feldgeräte 40 und 50 über die zentrale Einrichtung 20 parametriert werden können, wird ein einheitliches Übertragungsprotokoll verwendet, dass beispielsweise auf dem FDT/DTM-Konzept basiert. Dadurch ist sichergestellt, dass die zentrale Einrichtung 20 und die Feldgeräte 40 und 50 über eine standardisierte Schnittstelle verfügen.

Auf einem der zentralen Einrichtung 20 zugeordneten Monitor kann eine Bedienoberfläche erzeugt werden, wie sie in der Figur dargestellt ist. Die Bedienoberfläche kann in drei Bereiche unterteilt werden, und zwar in den Parametrierungsbereich 21, Anlagentopologie-Bereich 22 und Parameter/Funktionseditor-Bereich 23. In dem Anlagentopologie-Bereich 22 ist ein Abbild der Automatisierungsanlage 10 dargestellt.

Weiterhin sind in der zentralen Einrichtung 20 die Gerätebeschreibungen der Feldgeräte 40 und 50 hinterlegt. Beispielsweise definiert die Gerätebeschreibung des Feldgeräts 50 zwei Funktionen und die dazu gehörenden Parameter und Wertebereiche. Das Feldgerät 40 ist beispielsweise ebenfalls durch zwei Funktionen und die dazu gehörenden Parameter und Wertebereiche beschrieben. In dem Parametrierungsbereich 21 sind unter der Rubrik "Gerätesicht" unter anderem die Feldgeräte 50 und 40 (als Gerät 1 und Gerät 2 bezeichnet) aufgelistet, während unter der Rubrik "Funkionssicht" mehrere vorbestimmte Gerätefunktionen, die mit A, B bis X gekennzeichnet sind, aufgelistet sind. Mit Hilfe des im Feld 23 dargestellten Parameter-Funktionseditors kann die Bedienperson die Gerätefunktion oder Gerätefunktionen auswählen, die die am Feldbus 30 angeschalteten Feldgeräte 40 und 50 ausführen sollen.

Angenommen sei, dass die beiden Funktionen des Feldgerätes 50, die in der zentralen Einrichtung 20 hinterlegt ist, der definierten Gerätefunktion A bzw. der Gerätefunktion D entsprechen. Die beiden Funktionen des Feldgeräts 40, die ebenfalls in der zentralen Einrichtung 20 hinterlegt sind, entsprechen beispielsweise der vorbestimmten Gerätefunktion A bzw. der vorbestimmten Gerätefunktion X. Weiterhin sei angenommen, dass die Feldgeräte 40 und 50 von unterschiedlichen Herstellern stammen und somit nicht über einen gemeinsamen Parametersatz parametriert werden können.

Gemäß der in dem Anlagentopologiebereich 22 dargestellten Automatisierungsanlage sollen die beiden Feldgeräte 40 und 50 als Bohrer betrieben werden. Diese Funktion entspricht der Gerätefunktion A. Um die Feldgeräte 40 und 50 gemäß der gewünschten Gerätefunktion parametrieren zu können, wählt die Bedienperson zunächst die Gerätefunktion A aus dem Parametrierungsbereich 21 aus, die in dem Parameter-Funktionseditor-Bereich 23 dargestellt wird. Gemäß einer vorteilhaften Ausführung ist die zentrale Einrichtung 20 in der Lage, all die Feldgeräte automatisch heraus zu filtern, die Funktionen unterstützen, die der Gerätefunktion A entsprechen. Im vorliegenden Beispiel erkennt die zentrale Einrichtung 20, dass die Feldgeräte 40 und 50 Funktionen unterstützen, die der Gerätefunktion A entsprechen. Diese beiden Feldgeräte werden im vorliegenden Beispiel automatisch auf dem Parameter-Funktionseditor 23 der Gerätefunktion A zugeordnet. Die zentrale Einrichtung 20 ist ferner in der Lage, sowohl dem ausgewählten Feldgerät 40 als auch dem Feldgerät 50 den jeweiligen Parametersatz und dazugehörenden Wertebereich zuzuordnen, der zur Gerätefunktion A gehört. Die entsprechenden Daten "Parameter 1/Wert 1" und "Parameter 2/Wert 2" werden nun dem Feldgerät 40 bzw. 50 zugeordnet und beispielsweise im Parameter-/Funktionseditor-Bereich 23 dargestellt. Die zentrale Einrichtung 20 sorgt nunmehr dafür, dass der Parameter 1 und der Wert 1 über den Feldbus 30 zum Feldgerät 50 übertragen werden, während der Parameter 2 und der Wert 2 über den Feldbus zum Feldgerät 40 übertragen werden. Die Feldgeräte 40 und 50 werden mit Hilfe der empfangenen Parameter und Werte parametriert und somit für die gewünschte Gerätefunktion A eingerichtet.

Dank des beschriebenen Verfahrens und der beschriebenen Automatisierungsanlage 10 ist es möglich, dass eine Bedienperson lediglich durch die Auswahl einer gewünschten Gerätefunktion, hier die Gerätefunktion A, die Parametrierung der Feldgeräte auslösen kann, die die Gerätefunktion A unterstützen. Alternativ kann die Bedienperson neben der Gerätefunktion auch die Feldgeräte, die die ausgewählte Gerätefunktion ausführen sollen, manuell im Parametrierungsbereich 21 auswählen.

Eine mögliche Implementierung des beschriebenen Verfahrens sieht vor, dass die zentrale Einrichtung 20 die Gerätefunktion A als Adresse verwendet, unter der die Feldgeräte und die dazu gehörenden Parametersätze und Werte abgelegt sind, die diese Funktion unterstützen. Damit ist die zentrale Einrichtung 20 in der Lage, bei Auswahl eines Feldgerätes die Funktionen anzuzeigen, die das Gerät ausführen kann. Darüber hinaus ist die zentrale Einrichtung 20 in der Lage, zu einer ausgewählten Gerätefunktion all die Feldgeräte anzuzeigen, die diese Funktion unterstützen.

Für den Fall, dass die Feldgeräte 40 und 50 vom gleichen Hersteller sind und die gleichen Funktionen unterstützen, genügt es, beispielsweise der Gerätefunktion A, die den entsprechenden Funktionen der Feldgeräte entspricht, lediglich einen einzigen Parametersatz zuzuordnen. In diesem Fall ordnet die zentrale Einrichtung 20 der ausgewählten Gerätefunktion A die beiden Feldgeräte 40 und 50 sowie deren gemeinsamen Parametersatz und Wertebereich zu. Anschließend wird der gemeinsame Parametersatz und der gemeinsame Wertebereich sowohl zum Feldgerät 40 als auch zum Feldgerät 50 übertragen.

Mit der in der Figur dargestellten Automationsanlage ist es in einfacher Weise möglich, auch neue Feldgeräte mit neuen Funktionen an den Feldbus 30 anzuschalten. Hierzu wird wiederum die Gerätebeschreibung der neuen Feldgeräte in der zentralen Einrichtung 20 hinterlegt. Bei der erstmaligen Parametrierung eines neuen Feldgeräts, welches eine neue Funktion besitzt, wird zunächst eine neue Gerätefunktion C definiert, der der Parametersatz zugewiesen wird, der der entsprechenden Funktion des neuen Feldgerätes zugeordnet worden ist. Diese Zuordnung wird in der zentralen Einrichtung 20 gespeichert. Nach dem Aufrufen der neuen Gerätefunktion C an der zentralen Einrichtung 20 wird in der zuvor beschriebenen Weise das neue Feldgerät parametriert.

Wird zu einem späteren Zeitpunkt ein weiteres Feldgerät, welches die Gerätefunktion C unterstützt, an den Feldbus 30 angeschaltet, so kann dieses Feldgerät in einfacher Weise parametriert werden, indem die Bedienperson im Parametrierungsfeld 21 zunächst die Gerätefunktion C aufruft. Das neu angeschaltete Feldgerät kann je nach Ausführung der zentralen Einrichtung manuell ausgewählt und/oder aber automatisch von der zentrale Einrichtung 20 zur Parametrierung ausgewählt werden. Anschließend wird der zur Gerätefunktion C gehörende Parametersatz und, wenn vorhanden, Wertebereich zu dem neu angeschalteten Feldgerät übertragen.

Da mit dem beschriebenen Verfahren jedes an den Feldbus angeschaltete Feldgerät, welches parametriert worden ist, dessen Parametersatz und die diesem Feldgerät zugeordnete Gerätefunktion gespeichert werden, können neu angeschaltete Feldgeräte, die gleichen Gerätefunktionen unterstützen, parametriert werden, ohne dass die Bedienperson den zum Feldgerät gehörenden Parametersatz kennen muss.

Mit dem Verfahren ist es auch möglich, Funktionen zu verwenden, die zum Beispiel in der Gerätebeschreibung als Funktionsbeschreibung enthalten sind. Mit einer enntsprechenden Standardisierung wäre der Anwender somit in der Lage, eine Vielzahl von Geräten mittels einer Funktionsbeschreibung einfach zu verwenden.

## Patentansprüche

1. Verfahren zum Parametrieren von an einem Datenübertragungsmedium (30) angeschalteten Betriebsmitteln (40, 50), mit folgenden Schritten:
a) Speichern für wenigstens einige der angeschalteten Betriebsmittel (40, 50) jeweils eine Gerätebeschreibung, wobei jede Gerätebeschreibung wenigstens eine Funktion und den dazugehörenden Parametersatz enthält;
b) Speichern einer Liste von mehreren vorbestimmten Gerätefunktionen, denen jeweils der entsprechende Parametersatz der Betriebsmittel zugeordnet wird, welche die Gerätefunktion unterstützten;
c) Auswählen wenigstens einer Gerätefunktion; und
d) unter Ansprechen auf die ausgewählte Gerätefunktion Parametrieren wenigstens eines Betriebsmittels, welches diese Gerätefunktion unterstützt, **dadurch gekennzeichnet, dass**
Schritt b) das Zuordnen mehrerer verschiedener Parametersätze zu wenigstens einer vorbestimmten Gerätefunktion, die jeweils zum Parametrieren eines separaten Betriebsmittels verwendet werden können, umfasst;
Schritt c) das Auswählen mehrerer Betriebsmittel, die die ausgewählte Gerätefunktion unterstützen, umfasst; und
Schritt d) das Übertragen der der ausgewählten Gerätefunktion zugeordneten Parametersätze jeweils zu dem dazugehörenden Betriebsmittel und das Parametrieren der ausgewählten Betriebsmittel mit dem individuellen Parametersatz umfasst.

2. Verfahren nach Anspruch 1,
**dadurch gekennzeichnet, dass**
Schritt b) das Zuordnen eines einzigen Parametersatzes zu wenigstens einer vorbestimmten Gerätefunktion umfasst, wobei der Parametersatz zur Parametrierung einer Gruppe von Betriebsmitteln verwendet werden kann;
Schritt c) das Auswählen einer Gruppe von Betriebsmitteln desselben Gerätetyps umfasst; und Schritt d) das Übertragen des der ausgewählten Gerätefunktion zugeordneten Parametersatzes zu den ausgewählte Betriebsmitteln und das Parametrieren dieser Betriebsmittel umfasst.

3. Verfahren nach Anspruch 1 oder 2 **dadurch gekennzeichnet, dass**
mit dem Auswählen der Gerätefunktion automatisch die Betriebsmittel festgelegt werden, die parametriert werden sollen.

4. Verfahren nach einem der Ansprüche 1 bis 3,
**dadurch gekennzeichnet, dass**
jedem Parametersatz ein Wertebereich zugeordnet wird.

5. Verfahren nach einem der Ansprüche 1 bis 4,
**dadurch gekennzeichnet, dass**
die Betriebsmittel (40, 50) Feldgeräte sind und das Übertragungsmedium (30) ein Feldbus ist.

6. Verfahren nach einem der Ansprüche 1 bis 5,
**dadurch gekennzeichnet, dass**
in Schritt a) die jeweiligen Gerätebeschreibungen in einer zentralen Einrichtung (20) gespeichert werden und dass die Schritte b) und c) in der zentralen Einrichtung durchgeführt werden und Schritt d) von der zentralen Einrichtung (20) eingeleitet wird.

7. Verfahren nach einem der Ansprüche 1 bis 6,
**dadurch gekennzeichnet, dass**
in Schritt a) die Gerätebeschreibung in dem jeweiligen Betriebsmittel oder einer separaten Einrichtung gespeichert wird, dass
bei einer erstmaligen Bestimmung einer Gerätefunktion oder Änderung einer vorbestimmten Gerätefunktion die Gerätebeschreibung desjenigen Betriebsmittels, das diese Gerätefunktion unterstützt, einer zentralen Einrichtung (20) bereitgestellt wird, und dass die Schritte b) und c) in der zentralen Einrichtung durchgeführt werden und Schritt d) von der zentralen Einrichtung eingeleitet wird.

8. Verfahren nach einem der Ansprüche 1 bis 7,
**dadurch gekennzeichnet, dass**
in Schritt a) die Gerätebeschreibung in wenigstens einem entsprechenden Betriebsmittel oder einer separaten Einrichtung gespeichert wird, dass die erstmalige Bestimmung einer Gerätefunktion in dem wenigstens einen Betriebsmittel oder der separaten Einrichtung erfolgt, wobei der Gerätefunktion der entsprechende Parametersatz des jeweiligen Betriebsmittels zugeordnet wird, und dass die bestimmte Gerätefunktion einer zentralen Einrichtung (20) bereitgestellt wird.

9. Verfahren nach Anspruch 6, 7 oder 8,
**dadurch gekennzeichnet, dass**
Schritt d) automatisch von der zentralen Einrichtung (20 eingeleitet wird, wenn wenigstens eine Gerätefunktion ausgewählt worden ist.

## Claims

1. Method for parameterizing operating means (40, 50) connected to a data transfer medium (30), comprising the following steps:
a) storing a respective device description for at least some of the connected operating means (40, 50), wherein each device description contains at least one function and the associated parameter set;
b) storing a list of a plurality of predetermined device functions, to each of which is allocated the corresponding parameter set of the operating means which support the device function;
c) selecting at least one device function; and
d) in response to the selected device function, parameterizing at least one operating means which supports this device function,
**characterised in that**
step (b) includes the allocation of a plurality of different parameter sets to at least one predetermined device function, which can each be used to parameterize a separate operating means;
step c) includes the selection of a plurality of operating means which support the selected device function; and
step d) includes the transfer of the parameter sets allocated to the selected device function to the respective associated operating means and the parameterizing of the selected operating means with the individual parameter set.

2. Method as claimed in claim 1,
**characterised in that**
step b) includes the allocation of a single parameter set to at least one predetermined device function, wherein the parameter set can be used to parameterize a group of operating means;
step c) includes the selection of a group of operating means of the same device type; and step d) includes the transfer of the parameter set allocated to the selected device function to the selected operating means and the parameterizing of these operating means.

3. Method as claimed in claim 1 or 2,
**characterised in that**
with the selection of the device function, the operating means which are to be parameterized are automatically fixed.

4. Method as claimed in any one of claims 1 to 3,
**characterised in that**
each parameter set is allocated a value range.

5. Method as claimed in any one of claims 1 to 4,
**characterised in that**
the operating means (40, 50) are field devices and the transfer medium (30) is a field bus.

6. Method as claimed in any one of claims 1 to 5,
**characterised in that**
in step a) the respective device descriptions are stored in a central apparatus (20) and that the steps b) and c) are carried out in the central apparatus and step d) is initiated by the central apparatus (20).

7. Method as claimed in any one of claims 1 to 6,
**characterised in that**
in step a) the device description is stored in the respective operating means or a separate apparatus, that
during initial determination of a device function or change of a predetermined device function, the device description of the operating means, which supports this device function, of a central apparatus (20) is provided, and that the steps b) and c) are carried out in the central apparatus and step d) is initiated by the central apparatus.

8. Method as claimed in any one of claims 1 to 6,
**characterised in that**
in step a) the device description is stored in at least one corresponding operating means or a separate apparatus, that the initial determination of a device function takes place in the at least one operating means or the separate apparatus, wherein the device function is allocated the corresponding parameter set of the respective operating means, and that the determined device function of a central apparatus (20) is provided.

9. Method as claimed in claim 6, 7 or 8,
**characterised in that**
step d) is initiated automatically by the central device (20) when at least one device function has been selected.

## Revendications

1. Procédé pour le paramétrage de moyens d'exploitation (40, 50) connectés à un milieu de transmission de données (30), comprenant les étapes suivantes :
a) mémorisation pour au moins certains des moyens d'exploitation (40, 50) connectés avec à chaque fois une description d'appareil, chaque description d'appareil contenant au moins une fonction et l'ensemble de paramètres correspondant ;
b) mémorisation d'une liste de plusieurs fonctions d'appareil prédéfinies, à chacune desquelles l'ensemble de paramètres correspondant des moyens d'exploitation est attribué, lesquels assistent la fonction d'appareil ;
c) sélection d'au moins une fonction d'appareil ; et
d) en réaction à la fonction d'appareil sélectionnée, paramétrage d'au moins un moyen d'exploitation qui assiste cette fonction d'appareil,
**caractérisé en ce que**
l'étape b) comprend l'attribution de plusieurs ensembles de paramètres différents à au moins une fonction d'appareil prédéfinie, qui peuvent être utilisés respectivement pour le paramétrage d'un moyen d'exploitation séparé ;
l'étape c) comprend la sélection de plusieurs moyens d'exploitation qui assistent la fonction d'appareil sélectionnée ; et
l'étape d) comprend la transmission des ensembles de paramètres attribués à la fonction d'appareil sélectionnée à chaque fois au moyen d'exploitation correspondant et le paramétrage des moyens d'exploitation sélectionnés avec l'ensemble de paramètres individuel.

2. Procédé selon la revendication 1,
**caractérisé en ce que**
l'étape b) comprend l'attribution d'un unique ensemble de paramètres à au moins une fonction d'appareil prédéfinie, l'ensemble de paramètres pouvant être utilisé pour le paramétrage d'un groupe de moyens d'exploitation ;
l'étape c) comprend la sélection d'un groupe de moyens d'exploitation du même type d'appareil ; et
l'étape d) comprend la transmission de l'ensemble de paramètres attribué à la fonction d'appareil sélectionnée aux moyens d'exploitation sélectionnés et le paramétrage de ces moyens d'exploitation.

3. Procédé selon la revendication 1 ou 2, **caractérisé en ce que**
les moyens d'exploitation, qui doivent être paramétrés, sont définis automatiquement avec la sélection de la fonction d'appareil.

4. Procédé selon l'une quelconque des revendications 1 à 3,
**caractérisé en ce**
**qu'**une plage de valeurs est attribuée à chaque ensemble de paramètres.

5. Procédé selon l'une quelconque des revendications 1 à 4,
**caractérisé en ce que**
les moyens d'exploitation (40, 50) sont des appareils de terrain et le milieu de transmission (30) est un bus de terrain.

6. Procédé selon l'une quelconque des revendications 1 à 5,
**caractérisé en ce que**,
à l'étape a), les descriptions d'appareils respectifs sont mémorisées dans un appareil central (20)
et **en ce que** les étapes b) et c) sont effectuées dans le dispositif central et l'étape d) est mise en oeuvre par le dispositif central (20).

7. Procédé selon l'une quelconque des revendications 1 à 6,
**caractérisé en ce que**,
à l'étape a), la description d'appareil est mémorisée dans le moyen d'exploitation respectif ou un appareil séparé, **en ce que**,
lors d'une première détermination d'une fonction d'appareil ou modification d'une fonction d'appareil prédéfinie, la description d'appareil du moyen d'exploitation qui assiste cette fonction d'appareil est mise à la disposition d'un appareil central (20), et **en ce que** les étapes b) et c) sont réalisées dans l'appareil central et l'étape d) est mise en oeuvre par l'appareil central.

8. Procédé selon l'une quelconque des revendications 1 à 6,
**caractérisé** à ce que,
à l'étape a), la description d'appareil est stockée dans au moins un moyen d'exploitation correspondant ou un appareil séparé, en ce que la première détermination d'une fonction d'appareil s'effectue dans le au moins un moyen d'exploitation ou l'appareil séparé, l'ensemble de paramètres correspondant du moyen d'exploitation respectif étant attribué à la fonction d'appareil, et en ce que la fonction d'appareil définie est mise à la disposition d'un appareil central (20).

9. Procédé selon la revendication 6,7 ou 8, **caractérisé** à ce que
l'étape d) est mise en oeuvre automatiquement par l'appareil central (20) lorsqu'au moins une fonction d'appareil a été sélectionnée.
